# EUROPEAN PATENT SPECIFICATION

(11) **EP 0 993 510 B1**
(45) Date of publication and mention of the grant of the patent: **19.03.2003**
(21) Application number: 97931061.2
(22) Date of filing: 20.06.1997
(51) Int. Cl.: C22B 3/18, C22B 23/00, B09C 1/10

(54) **METHOD FOR PHYTOMINING OF NICKEL, COBALT AND OTHER METALS FROM SOIL**
VERFAHREN ZUR PHYTO-EXTRAKTION VON NICKEL, KOBALT UND ANDEREN METALLEN AUS DEM ERDREICH
PROCEDE DE PHYTOEXTRACTION DE NICKEL, DE COBALT ET D'AUTRES METAUX PRESENTS DANS LE SOL

(43) Date of publication of application: 19.04.2000
(73) Proprietor: THE UNIVERSITY OF SHEFFIELD, Sheffield, South Yorkshire S10 2TN (GB); UNIVERSITY OF MARYLAND COLLEGE PARK, College Park, MD 20742 (US)
(72) Inventor: Chaney, Rufus L., Beltsville, MD 20705 (US); Angle, Jay Scott, Ellicot City, MA 21042 (US); Baker, Alan J.M., Dore, Sheffield, Yorkshire S17 3EA (GB); Li, Yin-Ming, Potomac, MD 20854 (US)
(74) Representative: Mouget-Goniot, Claire
(86) International application number: US9709806
(87) International publication number: WO98059080

(56) References cited:
- WO-A-97/10346
- WO-A-97/34714
- WO-A-98/08991
- US-A- 5 320 663
- US-A- 5 364 451
- US-A- 5 711 784
- KRAEMER U ET AL: "FREE HISTIDINE AS A METAL CHELATOR IN PLANTS THAT ACCUMULATE NICKEL" NATURE,GB,MACMILLAN JOURNALS LTD. LONDON, vol. 379, 15 February 1996 (1996-02-15), pages 635-638, XP002024758 ISSN: 0028-0836
- BAKER A J M ET AL: "THE POSSIBILITY OF IN SITU HEAVY METAL DECONTAMINATION OF POLLUTED SOILS USING CROPS OF METAL-ACCUMULATING PLANTS" RESOURCES CONSERVATION AND RECYCLING,NL,ELSEVIER SCIENCE PUBLISHER, AMSTERDAM, vol. 11, no. 1/04, 30 June 1994 (1994-06-30), pages 41-49, XP000444293 ISSN: 0921-3449
- BERNAL M P ET AL: "COMPARISON OF THE CHEMICAL CHANGES IN THE RHIZOSPHERE OF THE NICKEL HYPERACCUMULATOR ALYSSUM MURALE WITH THE NON-ACCUMULATOR RAPHANUS SATIVUS" PLANT AND SOIL,NL,KLUWER ACADEMIC PUBLISHERS, DORDRECHT, vol. 164, 1 January 1994 (1994-01-01), pages 251-259, XP000650323

## Description

### BACKGROUND OF THE INVENTION:

### Field of the Invention:

This invention pertains to a method of extracting nickel, cobalt and other metals, including the platinum and palladium metal families, from soil by cultivation of the soil with hyperaccumulating plants that concentrate these metals in above-ground portions of the plants, which can be harvested, dried and smelted to recover the metal (metal phytomining).

### BACKGROUND OF THE PRIOR ART:

It has long been known that certain types of soil and geological materials, including serpentine, lateritic serpentine, ultramafic and meteor-impacted soils may be rich in nickel or cobalt, and are sites for mining of these metals. The cost of conventional mining for these metals remains high, and the level of metals required in geological materials to which current technology may be usefully applied are much higher than most serpentine, lateritic serpentine, ultramafic and meteor-derived soils.

U.S. Patent 5,364,451, Raskin et al, is directed to a method of removing metals from metal-rich soil by growing genetically altered plants of the family *Brassicaceae* in these soils, so as to remediate polluted soils at a reduced cost. Suitable parents for the mutants that are the subject of the Raskin patent include *B. juncea*. While the patent generally describes a large number of metals that may be recovered, specific artificial examples are directed to recovery of chromium and lead. The entire disclosure of U.S. Patent 5,364,451 is incorporated herein by reference.

A review of the examples of this reference, and application of the technology proposed, illustrates continuing problems posed in remediation of metal-rich soil, and recovery of the metals therefrom. In particular, the examples set forth reflect artificial culture in sand media with intermittent feeding with phosphate to permit plants to grow without severe yield reduction and without severe lead toxicity. The patent also relies on genetic mutations that are produced by random "mutagenesis", that is, the creation of a library of mutants or potential mutants from a starting parent by indiscriminate application of a mutagen, coupled with screening the offspring to define acceptable hyperaccumulators. While promising, the Raskin patent offers little basis for an opportunity to proceed directly with soil remediation through plant growth or culturing. Additionally, the patent offers little realistic opportunity for recovery of the metal itself, indicating only that under circumstances (not identified) the metal can actually be reclaimed.

Document WO-A-97/10346 discloses that the production of histidine is responsible for the characteristic ability of the genus *Alyssum* to accumulate high concentrations of metal such as nickel. This document also discloses the preparation of genetically modified plants that produce increased rates of histidine.
Document Krämer U. *et al.* (Nature, 379, 15 February 1996, pages 635-638) discloses that exposing hyperaccumulator species of *Alyssum* to nickel elicits a large increase in the levels of histidine and that the enhanced production of histidine is responsible for the nickel hyperaccumulation in *Alyssum.*
However none of these documents discloses or suggests the method according to the present invention.

One of the most widely found, and technologically important metals is nickel. Nickel is a natural constituent in all soils, being particularly high in concentration in serpentine, lateritic serpentine, ultramafic and meteor-derived soils. Cobalt, which has chemical and geological characteristics very similar to nickel, can similarly be found in these soils, and is another valuable metal. Other metals that are also subjects for phytomining within the scope of the invention, include those of the platinum and palladium families, including palladium, rhodium, ruthenium, platinum, iridium, osmium and rhenium which commonly co-occur with Ni and Co. Cultivation of plants which are hyperaccumulators of these metals, in metal-rich soils, or "phytomining", is a desirable alternative as a means for recovering metals from soil. Ordinary cultivation methods, however, without adequate preparation and maintenance of soil conditions, does not lead to adequate hyperaccumulation of metals in the plants, sufficient to make recovery of the metals from the plants economically interesting. Additionally, specific methods for recovery of the metals remain to be explored. Accordingly, it remains an object of those of skill in the art to develop a reliable system for phytomining of soils rich in nickel, cobalt and the other identified metals, naturally occurring or otherwise, that will lead to a recovery of these metals at economically acceptable levels.

### SUMMARY OF THE INVENTION:

By screening a wide variety of plants from the *Brassicaceae* family, the inventors have identified plants in the *Alyssum* genus which may be hyperaccumulators of nickel and which accumulate valuable amounts of cobalt. By definition, hyperaccumulator plants accumulate over 1000 mg Ni or Co/kg dry weight growing in the soils where they evolved. Because cobalt occurs at about 3-10% of the level of Ni in the listed soils, Ni is the dominant toxic metal which induced evolutionary selection of the Ni hyperaccumulator plants and Co is accumulated to economically useful levels but Ni hyperaccumulation is the dominant economic benefit of the phytomining technology. Evidence suggests members of the section Odontarrhena of the genus *Alyssum* are likely candidates as nickel hyperaccumulators. The plant may also concentrate, in the above-ground plant tissues, metal from the platinum and palladium families, including Pd, Rh, Ru, Pt, Ir, Os and Re, in significant amounts. Accumulation of nickel in plant tissues in excess of 2.5 percent is practicable.

The metals listed accumulated in biomass by growing nickel hyperaccumulating *Alyssum* species in the target soils. Some 48 taxa within the section Odontarrhena of the genus Alyssum are known to be hyperaccumulators of nickel. These include the following species already evaluated: *A. murale*, and *A. pintodasilvae* (*A. serpyllifolium ssp.), A. malacitanum, A. lesbiacum*, and *A. fallacinum*. Other Ni-hyperaccumulating species which may be employed include: *A. argenteum*, *A. bertolonii, A. tenium, A. heldreichii*. About 250 other plant taxa have been shown to hyperaccumulate nickel, but many of these do not exceed 10,000 mg Ni/kg d.w., and the majority are of tropical origin.

The identified metal species are accumulated by growing the *Alyssum* in nickel-rich soil, under specific soil conditions. The conditions include: 1) lowering the soil pH, which increases the phytoavailability of nickel; 2) maintaining low Ca or lowering Ca in the soil by leaching calcium from the soil by appropriate treatments and by use of low Ca, Mg-rich soil amendments; 3) using ammonium containing or ammonium-generating nitrogen fertilizers to improve plant growth and to increase Ni hyperaccumulation due to rhizosphere acidification; and 4) applying chelating agents to the soil to improve nickel uptake by the roots of the hyperaccumulating *Alyssum* species. Examples of suitable chelating agents include nitrilotriacetic aced (NTA). Other chelating agents commonly used in connection with increasing soil metal mobility for plant uptake include ethylenediaminetetraacetic acid, and ethylene glycol-bis-(β-aminoethylether)-N, N-tetraacetic acid. Maintenance of these four soil-conditioning factors will improve nickel hyperaccumulation in *Alyssum*, in excess of a 2.5 percent concentration in above-ground portions of the plant, particularly leaves and stems, which make for easy cultivation and metal recovery. This is preferable to concentration in the roots, discussed in Raskin et al, which may be an aid in soil remediation if non-leachable therefrom, but does not offer convenience for phytomining.

### DETAILED DESCRIPTION OF THE INVENTION:

Applicants have screened a large wild-type collection of germplasm to identify hyperaccumulating plants. In particular, plants of the *Brassicaceae* family, particularly naturally occurring plants as opposed to those with induced mutations, such as those employed in the Raskin patent, are known to be Ni + Co accumulators. Within the family, and even with the various genera, however, wide variations in metal accumulation, to the extent it occurs, do appear. *Alyssum* species that are preferred candidates for use in the claimed invention concentrate and hyperaccumulate nickel, show enhanced uptake of cobalt and may be useful in accumulating other metals. It has a preference for, and a high toxicity resistance to these metallic elements. This appears to be due to evolutionary driving forces, which permit the plant to benefit from the ecological niche presented. This should be contrasted with the response of a different *Brassicaceae* member, *Thlaspi caerulescens*, which accumulates very high levels of zinc and cadmium. While *Alyssum* exhibits a higher uptake rate at low nickel and cobalt concentrations than other species, *Thlaspi* actually grows well on soils with much higher Zn and Cd concentrations. Thus, while *Alyssum* concentrates nickel and cobalt over a range of concentrations, *Thlaspi* hyperaccumulates very high levels of Zn and Cd,some strains accumulating Ni and Co. Rather than relying on the unpredictable process of mutagenesis, the applicants in screening a large library of wild-type germplasm, have identified several *Alyssum* species including *A. murale, A. pintodasilvae (A. serpyllifolium ssp.), A. malacitanum, A. lesbiacum, A. tenium* and *A. fallacinum* as a suitable hyperaccumulators of nickel and useful in the enhanced uptake of cobalt. The same plants may also accumulate Pd, Rh, Ru, Pt, Ir, Os and Re. While these platinum and palladium metals are accumulated in lower concentrations, their greater value per unit weight, makes phytomining of these metals economically attractive as well.

### SOIL MANAGEMENT:

To improve nickel and cobalt sequestration in the above-ground tissues of *Alyssum* plants, the soil in which they are grown is preferentially conditioned taking advantage of four different factors.

These include soil pH, low calcium concentrations, use of ammonium containing or generating fertilizer rather than other N-fertilizers and application of chelating agents. Each of these is considered in turn below.

### SOIL PH:

The maintenance of preferred pH ranges in soil is well known in agriculture for a variety of reasons. Typically, pH of soil is altered or modified so as to maintain it within a near neutral range of about 6.0-7.5. Thus, soil near a limestone foundation or other building may be treated with acidifying soil amendments so as to reduce an alkaline pH. Soil with a naturally low pH may instead be treated with limestone or similar amendment, so as to increase the soil pH. A reduced pH increases the phytoavailability of nickel and cobalt. A reduced pH increases solubility, and optimizes the release of these metals for absorption by the roots, and translocation to the above-ground tissues of the plant. Soil pH can be maintained in any of a variety of established methods, and the methods themselves do not constitute an aspect of this invention. Preferably, soil pH is managed at a low value by addition of sulfur and use of ammonium - N fertilizers. The *Alyssum* species, and indeed, any plant species, grows best at its evolved optimum pH conditions. Thus, pH cannot be reduced so low as to substantially retard or inhibit plant growth. An optimum pH range for phytomining using *Alyssum* is a pH of 4.5 to 6.2, preferably 5.2-6.2. After extraction of economically phytominable Ni and Co from the soil, limestone application can raise soil to pH levels required by more traditional farm crops.

### LOW CALCIUM CONCENTRATIONS:

*Alyssum* species which hyperaccumulate Ni and Co evolved in Ni-rich ultramafic and serpentine soils which simultaneously have low soil calcium. The presence of high calcium concentrations in soil may inhibit nickel/cobalt hyperaccumulation by *Alyssum*. Acceptable calcium concentrations in soil ranges from an absent value to a value such that exchangeable soil calcium is less than 20% of exchangeable soil Mg. While values of calcium in the soil higher than this will not inhibit *Alyssum* growth, it will reduce nickel/cobalt hyperaccumulation, and thus frustrate a principal goal of this invention. Calcium concentrations may be reduced by any of a variety of known methods. A preferred method involves acidification of the soil with sulfur, sulfuric acid, or other amendments and leaching, followed by use of low Ca soil amendments. Whatever method is selected to reduce calcium concentration in soil, it should be selected so as to be consistent with the objective of soil phytomining.

### ADDITION OF AMMONIUM FERTILIZER:

Generally, high metal concentrations are toxic to plants, and inhibitory of plant growth. While *Alyssum* has developed the ability to hyperaccumulate nickel/cobalt in its above-ground plant tissues, nonetheless, fertilizer support for the growth, particularly in polluted soil, is an essential element for substantial hyperaccumulation. Use of high-ammonium N-fertilizers is of value. Nonetheless, the use of ammonium fertilizers per se is well known, and acceptable fertilizers and protocols will be arrived at by those of ordinary skill in the art on an empirical basis.

### ADDITION OF CHELATING AGENTS:

Metal chelates are commonly used in agriculture, and occur naturally is living cells. The addition of chelating agents, such a NTA, or any of a variety of amino-acetic acids known to those of ordinary skill in the art as chelating agents, to the soil to be phytomined for Ni/Co and Pt,Pd metals improves the movement of soil metals to root surfaces for uptake and translocation of these materials into the above-ground plant tissues. Any of a variety of known chelating agents of commerce may be used. A preferred chelating agent is NTA or EDTA. Typically, chelating agents will be added at 5-100 kg/ha after the plants are established. As with the use of fertilizers, optimum additions of chelating agents can be determined on an empirical basis. Chelating compounds which chelate Ni in the presence of high soil levels of Fe, Mg, and Ca selectively increase Ni uptake by the hyperaccumulator plants.

### METAL RECOVERY:

As noted, a principal object of this invention is the recovery of the metal sequestered by the hyperaccumulating plant. In U.S. Patent 5,364,451, plants are identified which accumulate the metals in the roots. Recovery of metals from roots poses substantial mechanical problems, including the recovery of the root itself, as well as recovery of the metal from the root tissue. By cultivating selected *Alyssum* genotypes, as contemplated in the claimed invention, a very high degree of the nickel/cobalt absorbed by the roots is translocated to above-ground tissues, such as stems, leaves, flowers and other leaf and stem tissues. This feature facilitates recovery of the metal extracted from the soil. The *Alyssum* can be harvested in conventional fashion, that is, cutting of the plant at soil level. The harvested materials are left to dry, in much the same fashion that alfalfa is dried, so as to remove most of the water present in the plant tissues. After drying, the plant material is collected from the field by normal agricultural practices of hay-making, incinerated and reduced to an ash with or without energy recovery. This organic material may alternatively be further treated by roasting, sintering, or smelting methods which allow the metals in an ash or ore to be recovered according to conventional metal refining methods such as acid dissolution and electrowinning. With metal concentrations as high as 2.5 to 5.0% in the above-ground plant tissues, metal recovery becomes economical, thus satisfying the primary objective of the invention. Conventional smelting/roasting/sintering temperatures of 500-1500 °F are sufficient to combust the organic material in the dried plant biomass, leaving a residue of the accumulated metal, with few contaminants which are known to interfere with metal refining. Indeed, it is suspected that the other components of the ash will be lower than with conventional mined ore concentrates.

## Claims

1. A method of recovering nickel from soil, comprising :
cultivating *Alyssum* plants in soil containing nickel, under conditions sufficient to permit said *Alyssum* to accumulate nickel from the soil in above-ground tissues of said *Alyssum*, harvesting said *Alyssum* as biomass materials after accumulation of nickel from the soil ; and recovering the nickel from said harvested biomass materials, wherein said conditions comprise maintaining the pH of the soil at within a range of 4.5 to 6.2.

2. Method according to claim 1, wherein said soil is conditioned by maintaining the pH of the soil at within a range of 5.2 to 6.2.

3. Method according to claim 1 or claim 2, wherein said soil is conditioned by maintaining low Ca or lowering Ca.

4. Method according to any one of claim 1 to claim 3, wherein said soil is conditioned by use of low Ca, Mg-rich soil amendments.

5. The method according to any one of claim 1 to claim 4, wherein said soil has an exchangeable calcium concentration and an exchangeable Mg concentration, and wherein the exchangeable calcium concentration is managed such that it has a value lower than 20% of the exchangeable Mg concentration.

6. Method according to any one of claim 1 to 5, wherein said soil is conditioned by applying one or more chelating agent to the soil.

7. Method according to claim 6, wherein said chelating agent is chosen from:
nitrilotriacetic acid, ethylenediaminetetraacetic acid, ethylene glycol-bis-(β- aminoethylether)-N, N-tetraacetic acid.

8. Method according to any one of claim 1 to 7, wherein said soil is conditioned by using ammonium containing or ammonium generating ammonium fertilisers.

9. Method according to any one of claim 1 to 8, wherein said conditions are sufficient to permit said *Alyssum* to accumulate nickel from the soil in above-ground tissues of said *Alyssum* such that at least 2.5% of the air-dried above-ground tissue of said *Alyssum* is nickel.

10. Method according to any one of claim 1 to 9, wherein said metal is recovered by drying and combusting said harvested biomass materials, to oxidize and vaporize organic materials present.

11. Method according to any one of claim 1 to 10, wherein said Alyssum plants are selected from the group consisting of *A. murale, A. pintodasilvae, A. malacitanum, A lesbiacum, A. fallacinum, A. argentum, A. bertolonii, A. tenium, A. heldriechii*, and mixtures thereof.

12. Method according to any one of claim 1 to 11, wherein said *Alyssum* plants are selected from the group consisting of *A. murale, A. pintodasilvae, A. heldriechii,* and mixtures thereof.

## Patentansprüche

1. Verfahren zur Rückgewinnung von Nickel aus Erde, umfassend:
Kultivieren von Alyssum-Pflanzen in Nickel-enthaltender Erde unter Bedingungen, die ausreichen, um zu ermöglichen, dass Alyssum Nickel aus der Erde in oberirdischen Geweben von Alyssum akkumuliert, Ernten von Alyssum als Biomassematerialien nach Akkumulierung von Nickel aus der Erde und Rückgewinnung des Nickels aus den geernteten Biomassematerialien, wobei die Bedingungen Aufrechterhalten des pH der Erde in einem Bereich von 4,5 bis 6,2 umfassen.

2. Verfahren nach Anspruch 1, wobei die Erde durch Aufrechterhalten des pH's der Erde innerhalb eines Bereichs von 5,2 bis 6,2 konditioniert wird.

3. Verfahren nach Anspruch 1 oder Anspruch 2, wobei die Erde durch Aufrechterhalten eines niedrigen Ca-Gehalts oder Verringern des Ca-Gehalts konditioniert wird.

4. Verfahren nach einem der Ansprüche 1 bis 3, wobei die Erde durch Verwendung von Bodenverbesserungsmitteln mit geringem Ca-Gehalt, die reich an Mg sind, konditioniert wird.

5. Verfahren nach einem der Ansprüche 1 bis 4, wobei die Erde eine austauschbare Calciumkonzentration und eine austauschbare Mg-Konzentration hat und wobei die austauschbare Calciumkonzentration so behandelt wird, dass sie einen Wert hat, der geringer als 20% der austauschbaren Mg-Konzentration ist.

6. Verfahren nach einem der Ansprüche 1 bis 5, wobei der Boden konditioniert wird, indem ein Chelatbildner oder mehrere Chelatbildner auf die Erde aufgebracht werden.

7. Verfahren nach Anspruch 6, wobei der Chelatbildner ausgewählt wird aus:
Nitrilotriessigsäure, Ethylendiamintetraessigsäure, Ethylenglycol-bis-(β-aminoethylether)-N,N-tetraessigsäure.

8. Verfahren nach einem der Ansprüche 1 bis 7, wobei die Erde konditioniert wird, indem Ammonium-haltige oder Ammonium-erzeugende Ammoniumdünger verwendet werden.

9. Verfahren nach einem der Ansprüche 1 bis 8, wobei die Bedingungen ausreichend sind, um zu ermöglichen, dass Alyssum Nickel aus der Erde in oberirdischen Geweben des Alyssums derart akkumuliert, dass mindestens 2,5% des luftgetrockneten oberirdischen Gewebes des Alyssums Nickel ist.

10. Verfahren nach einem der Ansprüche 1 bis 9, wobei das Metall durch Trocknen und Verbrennen der geernteten Biomassematerialien, um vorliegende organische Materialien zu oxidieren und zu verbrennen, zurückgewonnen wird.

11. Verfahren nach einem der Ansprüche 1 bis 10, wobei die Alyssum-Pflanzen aus der Gruppe bestehend aus A. murale, A. pintodasilvae, A. malacitanum, A. lesbiacum, A. fallacinum, A. argentum, A. bertolonii, A. tenium, A. heldriechii und Gemischen davon ausgewählt werden.

12. Verfahren nach einem der Ansprüche 1 bis 11, wobei die Alyssum-Pflanzen aus der Gruppe bestehend aus A. murale, A. pintodasilvae, A. heldriechii und Gemischen davon ausgewählt werden.

## Revendications

1. Méthode de récupération du nickel du sol comprenant :
la culture de plantes *Alyssum* dans un sol contenant du nickel dans des conditions suffisantes pour permettre auxdites *Alyssum* d'accumuler le nickel du sol dans les tissus situés au-dessus du sol desdites *Alyssum,* la récolte desdites *Alyssum* sous forme de biomasse après accumulation du nickel du sol ; et la récupération du nickel de ladite biomasse récoltée, dans laquelle lesdites conditions comprennent le maintien du pH du sol dans une gamme de 4,5 à 6,2.

2. Méthode selon la revendication 1, dans laquelle ledit sol est conditionné par un maintien du pH du sol dans une gamme de 5,2 à 6,2.

3. Méthode selon la revendication 1 ou 2, dans laquelle ledit sol est conditionné par un maintien d'un faible taux de Ca ou par un appauvrissement en Ca.

4. Méthode selon l'une quelconque des revendications 1 à 3, dans laquelle ledit sol est conditionné par l'utilisation d'amendements du sol pauvres en Ca et riches en Mg.

5. Méthode selon l'une quelconque des revendications 1 à 4 dans laquelle, ledit sol a une concentration en calcium échangeable et une concentration en Mg échangeable et dans laquelle la concentration en calcium échangeable est gérée de façon à avoir une valeur inférieure à 20% de la concentration en Mg échangeable.

6. Méthode selon l'une quelconque des revendications 1 à 5, dans laquelle ledit sol est conditionné par application dans le sol d'un ou de plusieurs agents chélatants.

7. Méthode selon la revendication 6, dans laquelle ledit agent chélatant est choisi parmi :
l'acide nitrilotriacétique, l'acide éthylène-diaminetétraacétique, l'acide éthylène glycol-bis-(β-aminoéthyléther)-N,N-tétraacétique.

8. Méthode selon l'une quelconque des revendications 1 à 7, dans laquelle ledit sol est conditionné par l'utilisation d'engrais à base d'ammonium contenant de l'ammonium ou libérant de l'ammonium.

9. Méthode selon l'une quelconque des revendications 1 à 8, dans laquelle lesdites conditions sont suffisantes pour permettre auxdites *Alyssum* d'accumuler le nickel du sol dans les tissus situés au-dessus du sol desdites *Alyssum* de sorte qu'au moins 2,5% des tissus situés au-dessus du sol séchés à l'air desdites *Alyssum* sont du nickel.

10. Méthode selon l'une quelconque des revendications 1 à 9, dans laquelle ledit métal est récupéré par séchage et combustion de ladite biomasse récoltée pour oxyder et évaporer les matières organiques présentes.

11. Méthode selon l'une quelconque des revendications 1 à 10, dans laquelle lesdites plantes *Alyssum* sont choisies dans le groupe constitué par *A. murale, A. pintodasilvae, A. malacitanum, A. lesbiacum, A. fallacinum, A. argentum, A. bertolonii, A. tenium, A. heldriechii* et des mélanges de celles-ci.

12. Méthode selon l'une quelconque des revendications 1 à 11, dans laquelle lesdites plantes *Alyssum* sont choisies dans le groupe constitué par *A. murale, A. pintodasilvae, A. heldriechii* et des mélanges de celles-ci.
